(19) Europäisches Patentamt
European Patent Office
Office européen des brevets

(11) EP 0 670 812 B1

(12) EUROPEAN PATENT SPECIFICATION

(45) Date of publication and mention
of the grant of the patent:
**08.04.1998 Bulletin 1998/15**

(21) Application number: **94900158.0**

(22) Date of filing: **19.11.1993**

(51) Int Cl.[6]: **C01B 33/12**, C01B 33/32,
C11D 3/08

(86) International application number:
**PCT/EP93/03256**

(87) International publication number:
**WO 94/12433 (09.06.1994 Gazette 1994/13)**

(54) **CRISTOBALITE**

CRISTOBALIT

CRISTOBALITE

(84) Designated Contracting States:
**AT BE CH DE DK ES FR GB GR IE IT LI NL PT SE**

(30) Priority: **27.11.1992 GB 9224902**

(43) Date of publication of application:
**13.09.1995 Bulletin 1995/37**

(73) Proprietor: **CROSFIELD LIMITED**
**Warrington, Cheshire WA5 1AB (GB)**

(72) Inventor: **THEUNISSEN, Joseph, Pierre, H.**
**NL-6245 GM Eysden (NL)**

(74) Representative:
**Collingwood, Anthony Robert et al**
**ICI Group Intellectual Property**
**P.O. Box 11**
**The Heath**
**Runcorn Cheshire WA7 4QE (GB)**

(56) References cited:
**EP-A- 0 101 113**     **EP-A- 0 363 197**
**WO-A-91/08168**     **DE-B- 1 717 157**
**FR-A- 1 121 266**     **GB-A- 686 876**

## Description

Method for the preparation of cristobalite with low overall Fe and Ti content, method for the preparation of an alkali metal silicate solution by using the cristobalite obtained, alkali metal silicate obtainable by drying said solution, and a detergent composition comprising the alkali metal silicate thus obtained.

The present invention in the first place relates to a method for the preparation of cristobalite, by treating sand at elevated temperature in the presence of a catalyst. Herein sand is not limited to ordinary sand but also meant to encompass quartz and other silica sources.

Such a method is well known and for instance described in "Ullmann's Encyklopädie der Technischen Chemie, 4. Auflage, Verlag Chemie, Weinheim, Band 21, Seiten 439-442 (1982)". In said method quartz sand is heated to a temperature of about 1000-1500 °C with a small amount of catalyst e.g. in the form of an alkali metal hydroxyde or carbonate.

Cristobalite is very usefull in the preparation of alkali metal silicates ($M_2O.nSiO_2$), which can be produced by two routes:

1- Preparation of alkali metal silicates by using the "furnace process", which is for instance described in DE-C-3 012 073.

In this process silicon dioxyde and an alkali metal hydroxyde (MOH) or carbonate ($M_2CO_3$) are fused at high temperatures of 1000-1600 °C in a furnace. During said process the following reaction takes place:

$$n.SiO_2 + M_2CO_3 \rightarrow M_2O.nSiO_2 + CO_2$$

The fused silicate leaves the furnace as a molten glass, which can be dissolved in water to form waterglass. The molar ratio of $SiO_2/M_2O$ can be chosen between 0 and 4.0 by varying the ratio sand / alkali metal hydroxyde or carbonate. However with increasing $SiO_2/M_2O$ molar ratio the solubility of the silicates decrease. Therefore in practice the molar ratio is approximately 3.3.

Silicates with different molar ratio's of $SiO_2/M_2O$ are usually referred to as follows:

| | |
|---|---|
| $SiO_2/M_2O = 1.0$ | Metasilicate. |
| $SiO_2/M_2O = 2.0$ | Alkaline silicate. |
| $SiO_2/M_2O = 2.5$ | Standard grade no special name. |
| $SiO_2/M_2O = 3.0\text{-}3.3$ | Neutral silicate. |

2- Preparation of alkali metal silicates by using the "hydrothermal process", which is for instance described in FR-A-1 112 807.

In this process sand is directly dissolved in an alkali metal hydroxyde at elevated temperature and pressure in an autoclave. The following reaction takes place:

$$n.SiO_2 + 2MOH \rightarrow M_2O.nSiO_2 + H_2O$$

Temperatures during this process reach about 175 - 320 °C with pressures varying from 9 to 115 atm. This reaction is limited to $SiO_2/M_2O$ molar ratio's of maximum approximately 2.4, as the reaction stops as soon as the thermodynamic equilibrium is reached. In practice the molar ratio is about 2.0 to 2.1 as the reaction rate decreases with higher molar ratio's, leading to correspondingly increasing reaction times. Further it is necessary to use an excess of sand to secure acceptable reaction rates at the end of the reaction.

This means that for a $SiO_2/M_2O$ molar ratio of 2.0 an excess of sand of 2-4 % is used in practice to obtain a reaction time of about 2-4 h at 200-240 °C.

As known in the state of the art it appeared to be possible to prepare alkali metal silicates with $SiO_2/M_2O$ molar ratio's of up to 4.0 with the hydrothermal process by using cristobalite in combination with or instead of sand. This process is e.g. disclosed in EP-A-0 363 197. Also for lower molar ratio's the reaction rate is improved and as the reaction of cristobalite is exothermal energy cost savings are obtained.

As generally known alkali metal silicates are used in detergents e.g. as detergency builders. The presence of metal ions, usually iron, titanium and aluminium, originating from the sand, has a detrimental effect on the stability of bleaching systems in detergents and must therefore be prevented. Especially the presence of titanium at ppm levels has to be prevented as this metal has a particularly strong destabilising effect. This effect of metal ions like iron and titanium is described in EP-A-0 101 113.

Alkali metal silicate in detergents can be added either in liquid form to the detergent slurry mix and dried in this detergent mixture e.g. in a spray-tower or can be added as a powder or in granular form in a dry mixing process.

When using the furnace process to produce the alkali metal silicate all metals present in the sand will dissolve in the waterglass thus obtained as a result of the relatively high temperature used. This is the main reason why silicates produced by the furnace process are less suitable for incorporation into detergents containing bleach systems based on active oxygen like peroxyde.

As it is impossible to produce higher molar ratios than 2.4 and not practical (economically) to exceed a molar ratio of 2.1 in the hydrothermal process, this is also a reason why silicates with molar ratios above 2.1, which can only be economically produced in the furnace process, are less suitable for incorporation into detergents containing active oxygen based bleach systems. An example of a peroxyde bleach system is: Perborate in combination with bleach activators e.g.: TEAD.

With the hydrothermal process much milder conditions are applied and as a consequence less metal (usually 20-80 %) will dissolve during the formation of the silicate. However still unacceptable levels of metal ions in the silicates are obtained. To avoid this problem sand can be used with a low overall Fe and Ti content, and in particular a low Ti content, although resulting metal contents are generally still unacceptable. Further the sand becomes less soluble with decreasing metal contents. When using a sand with a low metal content like Finnish sand or Norwegian sand (Norfloat [R] available from Sibelco, Belgium)) the hydrothermal process takes about 10 h at 230 °C to obtain a waterglass (silicate solution) with a molar ratio $SiO_2/M_2O$ of about 2.0-2.1. To achieve this reaction time the excess of sand even has to be increased to 6-10%.

Thus, in view of the above there still exists a need for a process for the preparation of silicates with a low metal content and in particular a low Ti-content. This need is even more pronounced for silicates with higher molar ratios (above 2.1, preferably between: 2.4-3.3). The latter factor is becoming more important nowadays as there is a tendency in the market for safer detergent products having lower alkalinity i.e.: higher molar ratios of $SiO_2/M_2O$.

Surprisingly it has been found, that when cristobalite is used to prepare the alkali metal silicate, the cristobalite being produced by treating sand at elevated temperatures in the presence of a catalyst, the sand having a low metal (Fe + Ti) content the resulting silicate has an even lower metal (Fe + Ti) content than when said sand would have been used in the hydrothermal process as such.

One would expect that due to the relatively high temperatures (1000-1500 °C) used to produce cristobalite that the dissolved metal content would be higher, as this happens with the furnace process to prepare alkali metal silicates. This is however not the case and the resulting alkali metal silicates possess an even lower metal content.

In a first aspect the invention therefore provides a method for the preparation of cristobalite by treating sand at elevated temperature in the presence of a catalyst, said method being characterized in that the sand has an overall iron and titanium content of less than 350 ppm and a titanium content of less than 200 ppm.

Prererably the sand has an overall iron and titanium content of less than 200 ppm and titanium content of less than 100 ppm. More preferably the sand has a titanium content of between 25 and 75 ppm.

In this respect reference is made to WO-A-9108168, GB-A-686 876 and FR-A-1 121 266 in which methods are disclosed for the preparation of cristobalite using high purity sand. The Ti and Fe-contents are however not specified.

As titanium is the metal which has the most detrimental effect on the stability of bleaching systems in detergents the Ti-content in the sand used to prepare cristobalite is preferably as low as possible.

Advantageously Norfloat® sand is used in the method according to the invention.

In another aspect of the invention a method is provided for the preparation of an alkali metal silicate solution, by reacting a silica source with an alkali metal hydroxide under conditions of increased pressure and temperature in a so-called hydrothermal process, said method beinq characterized in that at least part of the silica source is comprised of cristobalite according to the invention. The molar ratio of $SiO_2/M_2O$ is usually comprised between 1.0 and 4.0.

Some additional advantages of using cristobalite according to the invention for the production of silicates with a low overall Fe and Ti content and especially a low Ti content are:

- An increased capacity gain (approximately 50% more than for normal silicate based on normal cristobalite);
- Reduction of losses of sand;
- Savings in filter capacity for excess sand;
- Increased savings of repair/maintenance cost (and time) due to extreme reduction in abrasiveness; and
- No solubility problems as encountered with low Ti-sand.

Preferably sodium hydroxide is used as an alkali metal hydroxide to produce sodium silicate which is a generally preferred alkali metal silicate for incorporation into detergent compositions.

With the method according to the invention an alkali metal silicate solution can be obtained having a molar ratio

of $SiO_2/M_2O$ of higher than 2.1 and preferably higher than 2.4, and an iron content of less than 80 ppm and a titanium content of less than 20 ppm. More preferably the solution has an iron content of less than 50 ppm and a titanium content of less than 10 ppm.

By drying the above alkali metal silicate solution, an alkali metal silicate can be obtained.

A suitable detergent composition can comprise at least a detergent, a bleach system based on active oxygen, and an alkali metal silicate prepared according to the invention. Said detergent composition may of course contain all kinds of other additives generally used in detergents, and may also be in liquid form.

It was found, that the rate of transformation of quartz sands available with low Fe and low Ti contents into cristobalite vary considerably. The Norwegian sand Norfloat [R] is transferred into cristobalite faster at 1300 °C than Finnish sand.

|  | Finnish sand % cristobalite: | Norfloat [R] % cristobalite: |
|---|---|---|
| After 30 min. | 87 | 93 |
| After 45 min. | 89 | 99 |
| After 60 min. | 93 | >99 |
| After 90 min. | 97 | >>99 |

Therefore using the Norwegian sand Norfloat [R] clearly offers large potential savings in energy and capacity.

In the following a number of examples will be given to illustrate the invention.

## EXAMPLE 1

Cristobalite was prepared by conversion of Finnish sand at a temperature of approximately 1300 °C in 1 h by usinq 1% potassium carbonate as a catalyst.

The characteristics of Finnish sand are generally as follows:

| Mean particle size | 100 - 500 µm |
|---|---|
| Fe-content | 120 - 180 ppm |
| Ti-content | 40 - 100 ppm |

The Finnish sand used contained 48 ppm Ti, the mean particle size was 220 um and the Fe content was 130 ppm.

Sodium silicate was prepared by reacting sodium hydroxide with the cristobalite thus prepared in an autoclave at a temperature of 180 °C and a pressure of 11 bar for 50 min. The total cycle time inclusive filling, cooling and pumping out was 2 h. More than 99% of the cristobalite was dissolved in this process. The characteristics of the resulting waterglass were:

| Dry solid content | 49.7 % |
|---|---|
| $SiO_2$ content | 33.15 % |
| $Na_2O$ content | 16.55 % |
| Molar ratio $SiO_2/Na_2O$ | 2.06 |
| Ti-content | 3 ppm |

This means that only 19 % of the Ti was dissolved.

The resulting waterglass could be granulated by any suitable process to form granular sodium silicate, which could be used in ordinary detergent compositions with bleach systems based on active oxygen. The waterglass could also be used in liquid detergents.

For comparison, the same Finnish sand was used in several test runs directly in the hydrothermal process in the same autoclave. In order to achieve a molar ratio $SiO_2/Na_2O$ of 2.00-2.05 and a reaction time of 8-10 h, 8-10% excess sand had to be used and the temperature had to be raised to 210-230 °C. The pressure even exceeded 20 bar. The Ti content of the product varied between 5-7 ppm and the dry solids content between 48 and 50%. This means, that about 32-44% of the Ti was dissolved.

## EXAMPLE 2

In this example the Norwegian sand Norfloat [R] was used. This sand has a similar composition and particle size range as the Finnish sand.

The sample used had the following characteristics:

| Mean particle size | 360 µm |
|---|---|
| Fe-content | 120 ppm |
| Ti-content | 35 ppm |

The same conditions were used as in Example 1 in the hydrothermal process producing silicates from the cristobalite with a molar ratio $SiO_2/Na_2O$ between 2.05 and 2.10 and a solid content of 48-50%. The Ti content of the products obtained was also 3 ppm.

When using the sand as such under the same conditions as the Finnish sand in Example 1, producing silicates with molar ratios between 2.00 and 2.05 and solid contents between 48-50%, (reaction time: 8-10 h; 8-10 % excess sand, 210-230 °C), Ti contents were achieved of 5-7 ppm.

## EXAMPLE 3

Various samples of cristobalite as offered to the market by the Belgian company Sibelco were analysed with the following results:

| Mean particle size | 100 - 150 µm |
|---|---|
| Fe content | 180 - 200 ppm |
| Ti content | 150 - 250 ppm |

A sample was used in the hydrothermal process using Sodiumhydroxide and using the stoechiometric quantity of cristobalite (no excess) and exactly the same conditions as in examples 1 and 2 (180 °C; 50 min reaction time; 11 Bar).

This sample contained 192 ppm Fe and 210 ppm Ti. The product obtained had the following composition:
$Na_2O$ : 15.63% ; $SiO_2$ : 31.63% ; Dry solids content : 47.25 %; Molar Ratio : 2.09 ; Fe content : 25 ppm. ; Ti content : 50 ppm.

For comparison, several samples of sand, also obtained from Sibelco were tested with a similar composition, using the more severe conditions as required for sand and described in the previous examples producing a sodium silicate liquor with a molar ratio $SiO_2/Na_2O$ between 2.03 and 2.10 and a dry solid content of 47-49%. The Fe contents varied between 35 and 45 ppm and the Ti contents between 60 and 80 ppm.

In order to demonstrate the special feature of this invention, i.e.: the ability to produce silicate liquors with higher molar ratios $SiO_2/Na_2O$ with low Fe and low Ti contents, the following tests were carried out as described in Examples 4 and 5.

## EXAMPLE 4

The same cristobalite sample was used as in example 3 (ex Sibelco). In order to reach the higher molar ratio $SiO_2/Na_2O$, the reaction conditions had to be adjusted, i.e.:
Temp.: 190-210 °C; Pressure : 18-20 Bar; 5-10 % excess cristobalite; reaction time 4 h; cycle time : 5 h.

The following product was obtained:
$Na_2O$ : 8.63%; $SiO_2$ : 27.6 %; dry solids 36.2 %; molar ratio $SiO_2/Na_2O$ : 3.3; Fe content : 30 ppm; Ti content : 50 ppm.

## EXAMPLE 5

The cristobalite produced at 1300 °C from the Norwegian sand Norfloat [R] was also used to produce a silicate liquor with a molar ratio of 3.3. The same reaction conditions were used as in example 4.

The following product was obtained:
$Na_2O$ : 9.45 %; $SiO_2$ : 30.25 % : dry solids content : 39.7 %; molar ratio $SiO_2/Na_2O$ : 3.30; Fe content : 20 ppm. Ti content : 5 ppm.

This is a remarkable result, as it has until now not been found possible to produce a silicate liquor from sand with a molar ratio of around 3.3 with Fe or Ti contents in this order of magnitude, as it is needed to use the furnace route for sand.

Consequently it is now possible to produce silicates with higher molar ratios for detergents containing bleach systems as well.

The silicate liquor as obtained in example 5 was spray-dried yielding a sodium silicate powder with a molar ratio of 3.3 and approximately 80% dry solids content and 40 ppm Fe and 10 ppm Ti. Also the granular form could be produced with the same composition via the generally known compaction process.

## Claims

1. Method for the preparation of cristobalite, by treating sand at elevated temperature in the presence of a catalyst, **characterized in that** the sand has an overall iron and titanium content of less than 350 ppm and a titanium content of less than 200 ppm.

2. Method according to claim 1, **characterized in that** the sand has an overall iron and titanium content of less than 200 ppm and a titanium content of less than 100 ppm.

3. Method according to claim 2, **characterized in that,** the sand has a titanium content of between 25 and 75 ppm.

4. Method for the preparation of an alkali metal silicate solution, by reacting a silica source with an alkali metal hydroxide under conditions of increased pressure and temperature in a so-called hydrothermall process, **characterized in that,** at least part of the silica source is comprised of cristobalite as prepared by the method according to one or more of claims 1-3.

5. Method according to claim 4, **characterized in that** sodium hydroxide is used as the alkali metal hydroxide.

## Patentansprüche

1. Verfahren zur Herstellung von Cristobalit durch Behandlung von Sand mit erhöhter Temperatur in Gegenwart eines Katalysators,
dadurch **gekennzeichnet,** daß
der Sand einen Gesamtgehalt an Eisen und Titan von weniger als 350 ppm und einen Gehalt an Titan von weniger als 200 ppm hat.

2. Verfahren nach Anspruch 1,
dadurch **gekennzeichnet,** daß
der Sand einen Gesamtgehalt an Eisen und Titan von weniger als 200 ppm und einen Gehalt an Titan von weniger als 100 ppm hat.

3. Verfahren nach Anspruch 2,
dadurch **gekennzeichnet,** daß
der Sand einen Gehalt an Titan zwischen 25 und 75 ppm hat.

4. Verfahren zur Herstellung einer Alkalimetallsilicat-Lösung, bei dem eine Siliciumdioxid-Quelle mit einem Alkalimetallhydroxid unter erhöhtem Druck und erhöhter Temperatur nach einem sogenannten hydrothermalen Verfahren umgesetzt wird,
dadurch **gekennzeichnet,** daß
mindestens ein Teil der Siliciumdioxid-Quelle aus dem nach dem Verfahren nach einem oder mehreren der Ansprüche 1 bis 3 hergestellten Cristobalit besteht.

5. Verfahren nach Anspruch 4,
dadurch **gekennzeichnet,** daß
Natriumhydroxid als Alkalimetallhydroxid verwendet wird.

## Revendications

1. Procédé de préparation de cristobalite, en traitant du sable à température élevée, en présence d'un catalyseur, caractérisé en ce que le sable a une teneur globale en fer et titane inférieure à 350 ppm et une teneur en titane inférieure à 200 ppm.

2. Procédé suivant la revendication 1, caractérisé en ce que le sable a une teneur globale en fer et titane inférieure à 200 ppm et une teneur en titane inférieure à 100 ppm.

3. Procédé suivant la revendication 2, caractérisé en ce que le sable a une teneur en titane située entre 25 et 75 ppm.

4. Procédé de préparation d'une solution de silicate de métal alcalin par réaction d'une source de silice avec un hydroxyde de métal alcalin dans des conditions de pression et de température élevées dans un procédé appelé hydrothermique, caractérisé en ce qu'au moins une partie de la source de silice est composée de la cristobalite préparée par le procédé suivant l'une ou plusieurs des revendications 1 à 3.

5. Procédé suivant la revendication 4, caractérisé en ce que l'hydroxyde de sodium est utilisé comme hydroxyde de métal alcalin.